(19) Europäisches Patentamt
European Patent Office
Office européen des brevets

(11) **EP 2 765 306 B1**

(12) **EUROPÄISCHE PATENTSCHRIFT**

(45) Veröffentlichungstag und Bekanntmachung des Hinweises auf die Patenterteilung:
**17.05.2017 Patentblatt 2017/20**

(51) Int Cl.:
*F03B 1/00* (2006.01)   *F03B 17/06* (2006.01)
*F03B 11/00* (2006.01)

(21) Anmeldenummer: **14152912.3**

(22) Anmeldetag: **28.01.2014**

(54) **Vorrichtung zur Energieerzeugung**

Device for generating energy

Dispositif de production d'énergie

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.02.2013 EP 13154471**

(43) Veröffentlichungstag der Anmeldung:
**13.08.2014 Patentblatt 2014/33**

(73) Patentinhaber:
• **Cristoi, Florin**
  **83301 Traunreut (DE)**
• **Braun, Franz**
  **83301 Traunreut (DE)**

(72) Erfinder:
• **Cristoi, Florin**
  **83301 Traunreut (DE)**
• **Braun, Franz**
  **83301 Traunreut (DE)**

(74) Vertreter: **Rupprecht, Kay**
  **Meissner Bolte Patentanwälte**
  **Rechtsanwälte Partnerschaft mbB**
  **Widenmayerstraße 47**
  **80538 München (DE)**

(56) Entgegenhaltungen:
  **EP-A2- 1 529 927      US-A- 5 823 740**
  **US-A1- 2012 038 161**

**Beschreibung**

Die vorliegende Erfindung betrifft eine Vorrichtung zur Energieerzeugung, die beispielsweise in einem Fluid-durchflossenen Rohrleitungssystem, insbesondere, aber nicht ausschließlich in einem städtischen oder kommunalen Wasserversorgungssystem Anwendung finden kann. Ebenso kann sie bei Hochbauten sowohl zur Energieerzeugung als auch gleichzeitig als Druckminderer eingesetzt werden. Aus dem Stand der Technik sind bereits Kernkraftwerke und Fossilbrennstoffkraftwerke, insbesondere Kohle- und Gaskraftwerke bekannt. Seit dem Trend hinzu ökologisch unbedenklicheren Energieerzeugungsverfahren werden immer häufiger regenerative Energien wie zum Beispiel die Sonnenenergie, die Windenergie oder die Wasserkraft zur Warmwasser- und/oder Stromerzeugung verwendet.

US5823740 zum Beispiel zeigt eine Wasserturbine mit Gaszuführung. Insbesondere die Nutzung der Wasserkraft ist eine weithin und seit langer Zeit bekannte Form der Energieerzeugung, wie sie unter anderem bei Mühlen zum Erzeugen einer Drehbewegung eines Mühlwerks verwendet wird. Obwohl es ein großes Angebot an regenerativen Energien gibt, wird ihre Verfügbarkeit durch verschiedene Faktoren beschränkt. So sind beispielsweise neben den meteorologischen Standortbedingungen zusätzlich der Tag-Nacht-Zyklus und die Sonneneinstrahlung bei der Nutzung der Sonnenenergie und die geographischen Beschaffenheiten bei der Nutzung der Windenergie oder der Wasserkraft begrenzende Faktoren für die Energieerzeugung.

In Städten werden Häuser, insbesondere Hochhäuser, über weitvernetzte, geschlossene Rohrsysteme, insbesondere Wasserleitungen, mit Wasser versorgt. Hierfür wird ein Druck in den Systemen verwendet, um das Fluid von seiner Quelle über die Rohrsysteme zu den Häusern zu transportieren. Die überschüssige Transportenergie in Form von überschüssigem Druck wird jedoch meist nicht verwendet und geht ungenutzt verloren. Üblicherweise werden sogar Druckminderer eingesetzt, um den überschüssigen Druck zu senken. Es existieren zwar aus dem Stand der Technik bekannte Turbinen zur Stromerzeugung, doch entweder reduzieren diese den Fluiddruck soweit, dass ein eigenständiger Transport des Fluids nicht mehr möglich ist, oder die Turbine weist keine effiziente Energieerzeugung auf und ist somit nicht wirtschaftlich.

Der steigende Energiebedarf an ausreichend vorhandenem, mittels regenerativer Energien erzeugtem Strom macht die Versorgung von Haushalten und Industrieanlagen problematisch. Insbesondere das Auffinden und das Erschließen neuer Energiequellen ohne negative Beeinflussung vorhandener Systeme sind nicht ohne weiteres möglich bzw. bekannt.

Es ist daher die Aufgabe der vorliegenden Erfindung, eine Vorrichtung zur Energieerzeugung der eingangs genannten Art in vorteilhafter Weise weiterzubilden, insbesondere dahingehend, dass eine Vorrichtung zur Energieerzeugung mit einem verbesserten Wirkungsgrad bereitgestellt werden kann, wobei die Vorrichtung zur Energieerzeugung insbesondere kleinbauend realisiert werden kann, so dass diese z.B. in ein bestehendes Fluidverteilungssystem eingebaut werden kann.

Diese Aufgabe wird erfindungsgemäß gelöst durch eine Vorrichtung zur Energieerzeugung mit den Merkmalen des Anspruchs 1. Danach wird eine Vorrichtung zur Energieerzeugung bereitgestellt, welche wenigstens ein Fluidzuführmittel und wenigstens ein Fluidabflussmittel aufweist, des Weiteren eine Turbine mit wenigstens einer Turbinenschaufel, wenigstens ein Fluidstrombeschleunigungselement, mittels dessen ein Fluidstrom aus dem Fluidzuführmittel auf die wenigstens eine Turbinenschaufel zu deren Antrieb leitbar ist, des Weiteren wenigstens ein Gaszuführmittel, mittels dessen dem Druckkessel des Turbinengehäuses ein Gas, insbesondere Luft, zuführbar ist, und wenigstens ein Pulsationsmittel, mittels dessen das zugeführte Gas und das zugeführte Fluid in eine resonante Schwingung versetzbar sind.

Im Sinne der vorliegenden Erfindung soll unter dem Begriff "Fluidzuführmittel" eine Zuleitung für ein Fluid, insbesondere Wasser, verstanden werden, und unter dem Begriff "Fluidabflussmittel" eine Ableitung desselben. Der Begriff "Turbine" bezeichnet im weitesten Sinne ein Turbinenmittel mit wenigstens einer Turbinenschaufel, welche um eine Rotationsachse rotierbar in dem Druckkessel angeordnet ist, und unter dem Begriff "Fluidstrombeschleunigungselement" ist ein Fluidstrombeeinflussungsmittel in Form einer Düse oder dergleichen zu verstehen, womit der Fluidstrom beim Betrieb der gesamten Vorrichtung aus dem Fluidzuführmittel in Form einer Zuleitung auf die wenigstens eine Turbinenschaufel geleitet wird. Der Begriff "Gaszuführmittel" ist in der einfachsten Realisierung der erfindungsgemäßen Vorrichtung eine Luftzuleitung, mittels derer dem Druckkessel der Vorrichtung ein Gas, insbesondere Luft, zuführbar ist. Schließlich ist unter der Bezeichnung "Pulsationsmittel" ein Bestandteil der erfindungsgemäßen Vorrichtung zu verstehen, mittels dessen das der Vorrichtung zur Energieerzeugung zugeführte Fluid und/oder Gas zumindest teilweise in eine Schwingung, insbesondere in eine resonante Schwingung versetzbar ist.

Dadurch ergibt sich insbesondere der Vorteil, dass eine Vorrichtung zur Energieerzeugung mit einem verbesserten Wirkungsgrad bereitgestellt werden kann, wobei die Vorrichtung zur Energieerzeugung kleinbauend realisiert werden kann, so dass diese z.B. in ein bestehendes Fluidverteilungssystem eingebaut werden kann.

Ein weiterer Vorteil der erfindungsgemäßen Vorrichtung zur Energieerzeugung liegt in einer bei Bedarf benötigten und einstellbaren Druckminderung in einem bestehenden Fluidverteilungssystem, wodurch herkömmliche Druckminderer ersetzbar werden.

Insbesondere wenn das Gemisch aus Fluid und Gas in eine resonante Schwingung versetzt wird, ist eine signifikante Verbesserung des Wirkungsgrads der gesamten Vorrichtung erzielbar. Dies wird insbesondere mittels des in Resonanzfrequenz arbeitenden Pulsationsmittels erreicht, wobei die Resonanzfrequenz dem Fachmann auch als Eigenfrequenz bekannt ist und mittels derer eine geringe, der Vorrichtung zur Energieerzeugung zuzuführende Energie zu einer maximalen Schwingungsausdehnung des Gemisches führt. Die Resonanzfrequenz liegt im Niederfrequenzbereich bei einigen Hz, insbesondere zwischen 0 und 20 Hz, wobei das Pulsationsmittel mit wenigstens einer zur Resonanzschwingung führenden Frequenz arbeitet.

Mit Hilfe der in Schwingung versetzten zugeführten Fluide und/oder Gase, deren Kombination auch als Gas-Fluid-Gemisch bezeichnet wird, wird eine laminare Strömung, insbesondere des Gas-Fluid-Gemisches in eine turbulente Strömung, im vorliegenden Fall auch Wirbelströmung genannt, umgewandelt, der einen wesentlich niedrigeren Rotationswiderstand aufweist. Zumindest teilweise kann das Fluid durch das Fluidbeschleunigungsmittel verwirbelt werden. Die Turbinenschaufeln erfahren auf Grund dessen weniger Reibung und geringere Reibungsverluste beim Rotieren des wenigstens einen Turbinenmittels, wodurch der Wirkungsgrad der Vorrichtung zur Energieerzeugung verbessert wird. Laut Definition ist die laminare Strömung eine Bewegung von Flüssigkeiten und Gasen, bei der keine oder noch keine sichtbaren Turbulenzen, insbesondere Verwirbelungen und/oder Querströmungen, auftreten: Das Fluid strömt in Schichten, die sich nicht miteinander vermischen. In diesem Fall handelt es sich bei konstanter Strömungsgeschwindigkeit meistens um eine stationäre Strömung. Laut Definition ist die turbulente Strömung die Bewegung von Flüssigkeiten und Gasen, bei der Verwirbelungen auf allen Größenskalen auftreten. Diese Strömungsform ist gekennzeichnet durch meist dreidimensionale, scheinbar zufällige, instationäre Bewegungen der Fluidteilchen.

Das Pulsationsmittel bringt mit einer bestimmten Frequenz von ca. 1 bis 10 Hz die Luft und daraufhin das Wasser in Schwingung. Dadurch wird ein Stoffaustausch zwischen Gas und Wasser bewirkt und ein Gas-Wasser-Gemisch erzeugt, das auch mit den Begriffen "Lösung" (Gas in einer Flüssigkeit gelöst) und/oder "Schaum" (Gasförmige Bläschen in einer Flüssigkeit) bezeichnet werden kann. Das in Resonanz versetzte Gemisch beinhaltet Wassermoleküle, die nun in lockerer Verbindung zueinander stehen; das bedeutet, dass die intermolekularen Kräfte, wie z.B. die Van-der-Waals-Kräfte, auf die Wassermoleküle unter anderem auf Grund der hohen kinetischen Energie des Wassers einen geringeren Einfluss haben. Die resonante Pulsation in Luft und Wasser führt somit zu einer Stoff- und Energieübertragung (Stoffaustausch), mit hoher Effektivität und Energieeffizienz. Das Pulsationsmittel beaufschlagt den Druckkessel gleichmäßig mit Druckpulsationen bzw. Druckimpulsen, vergleichbar mit einem Schalldruck mit einer bestimmten Frequenz. Die Druckimpulse führen zu Dichte- und Geschwindigkeitsänderungen von Wasser und/oder Luft sowie zu Stoffaustauschbeschleunigungen. Die Wirbelströmung erfolgt auch an wandnahen Schichten und ermöglicht ebenfalls eine verbesserte Durchmischung von Luft und Wasser. Da bei den Druckpulsationen auch die Resonanzfrequenz von Luft und Wasser verwendet wird, ist nur eine geringe Energieleistung durch das Pulsationsmittel notwendig. Darüber hinaus wird durch die Resonanz die Geschwindigkeit des Stoffaustausches erhöht und es entstehen im Bereich unterhalb eines Luftpolsters nicht-stationäre, oszillierende bzw. pulsierende Wasserverwirbelungen mit Luftblasen und Kavitationserscheinungen. Im Vergleich zum laminar strömenden Wasser im unteren Bereich des Druckkessels bewegt sich das verwirbelte Wasser schneller und bietet gegenüber den Turbinenschaufeln weniger Widerstand. Laut dem Gesetz von Bernoulli sinkt der statische Druck von sich schnellbewegenden Flüssigkeiten, in diesem Fall Wasser, und es können sich daraufhin Mikrokavitationen innerhalb des Wassers bilden. Dies hängt auch von der Wassertemperatur, die vorzugsweise zwischen 5° bis 15° und im Durchschnitt bei 10° Celsius liegen sollte, und von der Resonanzfrequenz ab, die wiederum von der Menge an Wasser und Luft im Turbinengehäuse abhängig ist.

Die erfindungsgemäße Vorrichtung zur Energieerzeugung ist vorteilhafterweise in Hochhäusern einsetzbar, da in einem derartigen Gebäude sowohl die genutzte Wassermenge auf Grund der zahlreichen Bewohner als auch der Wasserdruck auf Grund der Gebäudehöhe höher sind. Für die Versorgung mit Wasser können Hochhäuser auf deren Dächer angeordnete Wassertanks aufweisen, die auch als Gegenmaßname bei Erdbeben dienen können. Das in den Wassertanks befindliche Wasser gerät im Falle eines Erdbebens in Gegenschwingung, so dass die durch das Erdbeben erzeugten Gebäudeschwingungen abgemildert bzw. in der Summe verringert werden.

Während die erhöhte Wassermenge den besonders wirtschaftlichen Betrieb der Vorrichtung zur Energieerzeugung erlaubt, ermöglicht der erhöhte Wasserdruck eine höhere Energieerzeugung auf Grund der höheren statischen Energie des Wassers.

Vorteilhafte Weiterbildungen der erfindungsgemäßen Vorrichtung zur Energieerzeugung sind in den Unteransprüchen angegeben.

In einer ersten vorteilhaften Ausbildung der Vorrichtung zur Energieerzeugung ist das Gaszuführmittel als Ansaugstutzen ausgebildet, welcher im Bereich der Erzeugung eines Unterdruckbereichs (durch den Fluidstrom aus dem Fluidstrombeschleunigungselement) in unmittelbarer räumlicher Nähe zum Austritt des Fluidstroms aus dem Fluidstrombeschleunigungselement in den Druckkessel des Turbinengehäuses mündet. Durch den Ansaugstutzen ist Gas zum und anschließend in den Druckkessel leitbar, das zum Erzeugen eines Luftpolsters im turbinenseitigen Bereich des Druckkessels dient. Des Weiteren ist die Querschnittsgröße des Ansaugstutzens bei der Förderung der Gasmenge pro Zeiteinheit entscheidend: je größer der Querschnitt, desto größer die geförderte Gasmenge bei gleicher Saugkraft durch den Unterdruckbereich. Mit der Positionierung des Ansaugstutzens in räumlicher Nähe zum Austritt des Fluidstroms aus dem Fluidstrombeschleunigungselement wird unter anderem die Saugkraft mitbestimmt: je größer der Abstand zum Unterdruckbereich, desto geringer der Einfluss des Unterdruckbereichs und schließlich umso geringer die Saugkraft.

In einer weiteren erfindungsgemäßen Ausgestaltung weißt die Vorrichtung ein Gaspolster auf, insbesondere ein Luftpolster, welches sich im Betrieb der Vorrichtung zwischen dem turbinenseitigen Ende des Druckkessels und dem im Druckkessel befindlichen Fluid bildet, wobei die Rotation der Turbinenschaufel teilweise in jenem Luftpolster erfolgt. Das im oberen Bereich des Druckkessels des Turbinengehäuses gebildete Luftpolster umschließt einen Teil, zum Beispiel 75%, der Turbine, insbesondere die Turbinenschaufeln. Der Luftdruck innerhalb des Druckkessels beeinflusst die Höhe bzw. Ausdehnung des Luftpolsters. Mit Hilfe des gebildeten Luftpolsters wird der Widerstand für die Turbinenschaufeln reduziert. Je größer das Luftpolster ist, desto kleiner ist der Anteil der Turbinenschaufeln, die sich durch das Wasser bzw. Luft-Wasser- Gemisch bewegen, und desto größer ist der Luftanteil des Luft-Wasser- Gemisches und schließlich umso reibungsloser bzw. widerstandsloser rotiert die Turbine. Die Turbine kann somit mit einer Freistrahlturbine, ähnlich einer Kombination aus Wasserluftdruckpumpe und Wasserturbine, verglichen werden, obwohl sie sich in einem geschlossenen Raum, dem Turbinengehäuse, befindet und sich zusätzlich durch ein im Raum befindliches Luft-Wasser-Gemisch bewegt. Das Gemisch ist vergleichbar mit schäumendem Wasser oder einer Gischt, die wegen des geringen spezifischen Gewichts kaum Auftrieb und kaum Widerstand bietet. Die Eigenfrequenz eines schwingungsfähigen Systems aus einem Luft-Wasser-Gemisch wird nach der folgenden Formel 1 berechnet und ist auch vom Wasservolumen im System, das die Vorrichtung aufweist, abhängig:

$$f_R \approx \frac{1}{2\pi} \sqrt{\frac{P_W + P_L \cdot g \cdot h_L}{\rho_L \cdot h_L \cdot \dfrac{V_W}{A_T}}} \qquad \text{(Formel 1)}$$

$P_W$ = Wasserdruck $h_L$ = Höhe des Luftpolsters
$P_L$ = Luftdruck $\rho_L$ = Gas(Luft)-Dichte
$A_T$ = Fläche der Turbine $V_W$ = Volumen des Wassers

Der Wasserdruck $P_W$ entspricht dem am Fluidzuflussmittel anliegenden Fluiddruck. Der Luftdruck $P_L$, insbesondere der Gas-Fluid-Druck, wird innerhalb der Vorrichtung über entsprechende Sensoren gemessen. Die Höhe des Luftpolsters $h_L$ entspricht einer Höhe im oberen Bereich des Turbinenmittels, insbesondere dem Abstand zwischen der Oberseite der Turbine und der ihr zugewandten Gehäuse-Innenoberfläche. Die Gasdichte $\rho_L$, insbesondere die Luftdichte, ist vorbestimmt und/oder wird innerhalb der Vorrichtung über entsprechende Sensoren gemessen, um das Verhältnis von Gas-Fluid-Gemisch zum Gesamtvolumen der Turbine zu überwachen. Das Volumen des Wassers $V_W$ entspricht dem des in die Vorrichtung eingespritzten Wassers, das noch nicht über das Fluidabflussmittel abgeflossen ist. Die Fläche der Turbine $A_T$ entspricht der mit dem Luftpolster in Kontakt stehenden Fläche, insbesondere der Oberfläche der Oberseite der Turbine.

Vorteilhafterweise ist das Fluidstrombeschleunigungselement eine Düse, die mittels einer Düsensteuerung steuerbar ist, welcher die Ausgangssignale eines im Druckkessel im Bereich des Fluideintritts angeordneten Drucksensors und/oder eines im Bereich des Fluidaustritts angeordneten Pneumatiksensors und eines im Bereich des Fluidaustritts angeordneten Regelventils zum Regeln des Fluiddrucks zugeführt werden. Dadurch werden unter anderem die Fluidstromgeschwindigkeit und der damit erzeugte Unterdruck kontrolliert. Das wenigstens eine Fluidstrombeschleunigungselement kann zusätzlich röhrenförmig ausgebildet sein und manuell und/oder mittels wenigstens eines Drucksensors und/oder wenigstens eines Pneumatiksensors steuerbar sein. Der Drucksensor misst den unmittelbar bei der Düse herrschenden Wasserdruck, insbesondere den Druck des Gas-Fluid-Gemisches; zusätzlich oder alternativ wird der Wasserdruck des aus der Düse tretenden Wasserstrahls gemessen. Der Pneumatiksensor misst mittelbar und/oder unmittelbar die Fließgeschwindigkeit des im Fluidabflussmittel zu einem Verbraucher abfließenden Fluides, insbesondere die Wassergeschwindigkeit beim Austritt aus der Turbine in Richtung Verbraucher. Der Pneumatiksensor kann beispielsweise als Pitot-Rohr oder als, insbesondere magnetisch induktiver, Durchflussmesser ausgebildet sein. Die Düse wird insbesondere, aber nicht ausschließlich mittels des Drucksensors und/oder des Pneumatiksensors in der Weise gesteuert, dass unabhängig von der entnommenen Wassermenge über das Fluidzuführmittel stets ein ausreichender Druck auf einer Verbraucherseite, die nach dem Fluidabflussmittel folgt bzw. an dieses angeschlossen ist, zur Verfügung steht. Der Druck am Fluidzuführmittel, der durch die Stadtwerke oder durch die potentielle Energie des Wassers aus einem Wassertank gegeben ist, und der Druck am Fluidabflussmittel, der durch den für den Verbraucher notwendigen Wasserdruck bestimmt ist, bleibt jeweils konstant. Je nach Verbrauch ändert sich lediglich die Wassermenge, die durch die Düse/n in die Turbine gelangt und von dort zum Verbraucher abfließt. Der Drucksensor am Fluidstrombeschleunigungselement und der Drucksensor am Fluidabflussmittel sind ausgelegt, den Druck in der Turbine entsprechend den Erfordernissen des Verbrauchers zu überwachen und mittels der Düse konstant zu halten. Der Pneumatiksensor ist ausgelegt, die über das Fluidabflussmittel an einen Verbraucher abgegebene Wassermenge zu ermitteln, um anschließend mittels der Düse Wasser einzuspeisen und die Fehlmenge wieder auszugleichen. Die Regelung sowohl des Drucks als auch der benötigten Wassermenge erfolgt über eine Düsensteuerung, die an die Sensoren gekoppelt ist und die die Größe der Düsenöffnung und somit die Menge des Fluiddurchflusses regelt. Weist die Vorrichtung mehrere Düsen auf, sind diese in vorteilhafterweise in gleichem Abstand und Winkel zueinander und koplanar um die Rotationsachse eines Rotationselements, insbesondere einer Welle, angeordnet. Die Düse ist über Sensoren und/oder manuell steuerbar. Die Düse weist eine Ausgangsöffnung mit einem runden oder vorzugsweise einem langen und dünnen, schlitzförmigen Querschnitt auf. Gemäß der Impulserhaltung wird dabei die Bewegungsenergie eines Fluids optimal auf eine Turbine übertragen und sie somit in Rotation versetzt, wenn die Fluidmoleküle senkrecht auf die Oberfläche der Turbinenschaufel treffen. Da die dahinter befindlichen bzw. im Fluidstrahl nachfolgenden Moleküle durch die vorherigen, bereits von einer Turbinenschaufel umgelenkten Moleküle in eine andere Richtung abgelenkt werden, treffen diese nicht mehr senkrecht auf die Turbinenschaufeln auf. Dieser Effekt wird durch einen Wasserstrahl aus einer Düse mit einem schlitzförmigen, vorzugsweise parallel zur Drehachse der Turbine angeordneten Querschnitt reduziert und somit die Energieübertragung optimiert. Das Regelventil stellt sicher, dass stets ein ausreichender Druck und/oder eine ausreichende Menge auf der Verbraucherseite zur Verfügung steht und das Fluid ohne notwendige Hilfsmittel, insbesondere ohne eine Pumpe, mittels des Rohrsystems zum Verbraucher gelangt. Dieses Regelventil hat gleichzeitig auch eine Sperrfunktion, wodurch sichergestellt wird, dass ein sich auf der Verbraucherseite bzw. im Druckkessel aufbauender Druck nicht zurück in die Turbine schlägt.

Vorzugsweise enthält das Pulsationsmittel eine Membran als wesentlichen Bestandteil. Eine Membran, auch Schwingungsmembran oder Oszillationsmembrane genannt, ist eine dünne Haut oder Folie, die in diesem Fall Schwingungen erzeugen soll. Die Membran kann aus einem künstlich hergestellten Stoff bestehen. Des Weiteren kann die Membran in einem festen Rahmen eingespannt sein wie bei einer Trommel, ihr Rand kann aber auch frei schwingen wie bei einem Lautsprecher. Beide Varianten unterscheiden sich sehr deutlich bezüglich möglicher Modi und Frequenzen. Sie kann zur Erzeugung der Schwingung dienen. Die Anregung zu Membranschwingungen setzt voraus, dass eine andauernd einwirkende äußere Kraft vorhanden ist, die durch die Zugspannung mittels einer Randeinspannung gegeben ist. Die Frequenz, mit der die Membran in Schwingung und das schwingungsfähige System aus dem Luft-Wasser-Gemisch in Resonanz versetzt wird, liegt in der Nähe der Eigenfrequenz des Systems und wird vorzugsweise kaum durch die Membran gedämpft.

In einer weiteren vorteilhaften Ausführungsform kann das Pulsationsmittel des Weiteren wenigstens ein mit der Membran zusammenwirkendes Piezoelement und/oder eine mit der Membran zusammenwirkende Elektromagneteinheit als Antriebselement aufweisen. Die Schwingungsanregung kann somit auf elektrischem Wege erfolgen. Die durch die erfindungsgemäße Vorrichtung erzeugte Energie in Form von Strom kann zumindest teilweise zur Versorgung des Pulsationsmittels verwendet werden. Des Weiteren weisen diese Antriebselemente für die Membran eine hohe Betriebssicherheit auf und sind somit ausfallsicher und störungssicher.

Alternativ kann das Pulsationsmittel vorteilhafterweise wenigstens ein mit der Membran zusammenwirkendes Hydraulikmittel und/oder Pneumatikmittel als Antriebsmittel aufweisen. Auch diese Antriebsmittel sind bereits seit langem bekannt und technologisch ausgereift und weisen somit ebenfalls eine hohe Betriebssicherheit auf und sind ausfallsicher und störungssicher. Das durch das Fluidzuführmittel bzw. Gaszuführmittel in die Vorrichtung zugeführte Fluid bzw. Gas kann zumindest teilweise abgezweigt und in das Hydraulikmittel bzw. Pneumatikmittel geleitet werden, um dieses anzutreiben und die Membran in Schwingung zu versetzen. Dadurch muss das Hydraulikmittel bzw. Pneumatikmittel nicht mit einer zusätzlichen externen Energiequelle versorgt werden. Um die Vorteile der verschieden ausgebildeten Pulsationsmittel zu verbinden, gibt es auch Ausführungsbeispiele, die eine Kombination der elektrisch, pneumatisch und/oder hydraulisch betriebenen Pulsationsmittel aufweisen. Das Pulsationsmittel, in welcher Form auch immer, beeinflusst den Stoffaustausch im Gas-Fluid-Gemisch dadurch positiv, dass es dieses über eine Membrane in Schwingung versetzt. Aufgrund der Schwingung wird die Molekularbindung im Wasser aufgelockert, die Schwingung breitet sich sehr schnell aus, der Stoffaustausch zwischen Wasser und Luft wird begünstigt und der Rotationswiderstand der Turbine fällt. Dadurch werden, insbesondere in dem geschlossenen System, annähernd die Bedingungen einer Freistrahlturbine geschaffen.

Vorzugsweise ist in dem Gaszuführmittel wenigstens ein Druckventil angeordnet. Dieses öffnet sich durch den am Fluidstrombeschleunigungselement erzeugten Unterdruck, lässt ein Gas passieren und erlaubt somit einen Anstieg des Luftdrucks innerhalb des Druckkessels. Das Druckventil erlaubt kein Herausströmen des Fluids aus dem Druckkessel und entspricht daher einem Sperrventil oder Rückschlagventil. Dank des Zuluft-Druckventils kann die Menge an zugeführtem Gas und der Gasanteil des Gas-Fluid-Gemisches kontrolliert werden. Das Gaszuführmittel ist vorteilhafterweise zwischen dem Fluidstrombeschleunigungselement und der Turbinenschaufel, auf die der Fluidstrahl trifft angeordnet, wobei der Strahl des Fluidstrombeschleunigungselements mit hoher Geschwindigkeit auf die Turbinenschaufeln trifft. Dies geschieht relativ verlustfrei, da sich ein Unterdruck (vakuumähnlicher Zustand / Venturi-Prinzip) um den Wasserstrahl bildet. Durch den Unterdruck wird Luft von dem Gaszuführmittel ohne weitere Hilfsmittel wie z.B. einer Pumpe angesaugt.

Als vorteilhaft hat sich ebenfalls herausgestellt, dass das Turbinengehäuse im Rotationsbereich der Turbine eine raue und/oder kantige Innenoberfläche zum Erzeugen einer turbulenten Strömung des Fluids aufweist. Dadurch entstehen Verwirbelungen an der Innenoberfläche, die ein Durchmischen von Fluid und Gas und somit ein Erzeugen eines Fluid-Gas-Gemisches fördern. Die Struktur der Innenoberfläche kann durch Verarbeitung wie z.B. Aufrauen und/oder auf Grund einer Materialstruktur entstehen, die auch mittels einer auf der Innenoberfläche angebrachten Folie erzeugt werden kann.

In einer weiteren vorteilhaften Ausführungsform kann das Turbinengehäuse stromabwärts und außerhalb des Rotationsbereichs der Turbine eine glatte Innenoberfläche zum Erzeugen einer laminaren Strömung des Fluids aufweisen. Im Gegensatz zur turbulenten Strömung fördert die laminare Strömung ein Ausgasen von z.B. Luft aus dem Wasser und hilft dabei, das Fluid-Gas-Gemisch aufzulösen. Dadurch werden Stockungen bei der Wasserversorgung auf Grund von Luftblasen innerhalb des Wassers in einem der Vorrichtung nachfolgenden Verbraucher, beispielsweise in einem Wasserhahn, vermieden.

Die Turbine weist vorteilhafterweise wenigstens einen Mischzylinder zum Mischen des dem Druckkessel zugeführten Gases mit dem den Druckkessel durchströmenden Fluid auf. Mit dem Mischen wird ein Erzeugen des Fluid-Gas-Gemisches gefördert und somit dessen Widerstand reduziert. Die Zylinder können konzentrisch bzw. koaxial um die Drehachse an der zum Fluid bzw. Fluid-Gas-Gemisch gerichteten Turbinenseite angeordnet sein. Die Höhe der Zylinder kann sich mit steigendem Abstand zur Drehachse verringern, um einen kleineren Widerstand zu bieten und somit die Hebelwirkung der äußeren Zylinder auf die Turbine zu verringern.

Ein Abluftventil in einer weiteren vorteilhaften Ausgestaltung der Erfindung ist am turbinenseitigen Ende des Druckkessels angeordnet und mittels eines im Druckkessel angeordneten Luftdrucksensors steuerbar. Dieses Ventil öffnet sich, sobald ein vorbestimmter maximaler Druck erreicht wird, und lässt Gas entweichen, um den Gasdruck innerhalb des Druckkessels zu senken bzw. die Dicke des Luftpolsters zu steuern. Das Abluftventil und der Luftdrucksensor können in einer Einheit oder einzeln, d.h. separat, angeordnet und/oder ausgebildet sein. Andererseits kann das Ventil derart ausgebildet sein, dass es sich z.B. auf Grund einer Feder zum Schließen des Ventils ab einem bestimmten Druck automatisch öffnet. Das Abluftventil öffnet sich bei Überdruck und lässt Luft aus dem Druckkessel entweichen. Währenddessen kann Wasser durch die Düse in den Druckkessel hineingeleitet werden, bis ein bestimmtes Höhenniveau erreicht wurde, vorzugsweise bis zu den Turbinenschaufeln. Die Vorrichtung ist derart ausgebildet, dass daraufhin bzw. während des Betriebs die gleiche Menge an Wasser pro Zeiteinheit durch die Düse hineinfließt wie sie durch die Wasserabflussleitung abfließt. Das bedeutet, dass die Wassermenge bzw. das Wasservolumen im Druckkessel während des Betriebs im Wesentlichen konstant bleibt. Durch das Einleiten des Wassers in Form eines Wasserstrahls mittels der Düse wird in unmittelbarer Nähe der Düsenöffnung ein Unterdruck erzeugt, der Luft über das Zuluft-Druckventil ansaugt und dadurch den Luftdruck im Druckkessel erhöht, vorzugsweise auf 2,0 bis 2,5 bar. Das Zuluft-Druckventil und/oder die Düse sind derart ausgebildet und/oder zueinander angeordnet, dass erst ab einer bestimmten Geschwindigkeit des Wasserstrahls der Unterdruck groß genug ist, um das Zuluft-Druckventil zu öffnen und Luft anzusaugen. Erreicht der Luftdruck des Luftpolsters eine bestimmte Obergrenze wie z.B. 2,5 bar, wird automatisch das Abluftventil geöffnet, sodass die Luft entweichen kann, bis wieder ein vorbestimmter Druck des Luftpolsters im Druckkessel erreicht wird. Da außerdem Wasser, im Gegensatz zu Luft, kaum komprimierbar ist und das Wasservolumen im Druckkessel konstant bleibt, bleibt das Volumenverhältnis von Wasser und Luft ebenfalls konstant. Während des Betriebs der Luftpulsatoren, die im oberen Bereich des Druckkessels der Turbine und sogar im Zuluft-Druckventil eingebaut sein können, wird die Luft in Schwingung gebracht. Die Schwingungen werden weiter an das Wasser übertragen, wobei vorzugsweise eine Pulsationsresonanz, d.h. eine über das Pulsationsmittel induzierte Resonanz, erreicht wird. Sobald dies der Fall ist, ist die Vorrichtung für den Betrieb und somit zur Energieerzeugung bereit.

Weitere vorteilhafte Effekte der erfindungsgemäßen Vorrichtung zur Energieerzeugung, die unter anderem durch die vorteilhaften Weiterbildungen erzielt werden, sind im Folgenden aufgeführt und dienen der weiteren Erläuterung des Erfindungsgegenstands.

Das Luftpolster sammelt sich im oberen, vorzugsweise in dem turbinenseitigen Bereich des Druckkessels an und dient zum einen dazu, die Turbinenschaufeln von dem im unteren Bereich des Druckkessels angesammelten Wasser zu trennen, wodurch die Turbine in dem Luftpolster einen geringeren Widerstand als im Wasser erfährt, und zum anderen kann durch den Druck des Luftpolsters, der bei stetigem Ansaugen von Luft durch das Zuluft-Druckventil steigt, die aus dem Druckkessel fließende Wassermenge kontrolliert werden. Das bedeutet, dass mit dem Druck ebenfalls die Höhe bzw. Dicke des Luftpolsters kontrolliert und der Wirkungsgrad der Turbine auf Grund des mengenmäßig angestiegenen Luftanteils verbessert wird. Die Luft bestimmt den Gesamtdruck im Druckkessel, da das Wasser, im Gegensatz zur Luft, kaum kompressibel ist und den durch die Luft ausgeübten Druck gleichmäßig nach außen, insbesondere an den Druckkessel, weitergibt. Wie bereits zuvor beschrieben, wird das Luftpolster durch die Pulsationsmittel in Schwingung versetzt und überträgt diese Schwingungen an das im unteren Bereich des Druckkessels angesammelte Wasser. Hierdurch, aber auch durch den Luftdruck und die Rotation eines Teils der Turbine im angesammelten Wasser, wird eine Durchmischung des Wassers mit Luft begünstigt und das zuvor genannte Luft-Wasser-Gemisch erzeugt. Dieses Gemisch hat einen geringeren Widerstand als das Wasser und verbessert somit ebenfalls den Wirkungsgrad der Vorrichtung.

Während die Wirbelströmung bzw. die turbulente Strömung im oberen Bereich des Druckkessels ein Trennen von Luft und Wasser in Form von Ausgasungen und Kavitationen soweit wie möglich unterdrückt, werden im unteren Bereich diese Effekte durch Herstellen einer laminaren Strömung begünstigt und forciert. Durch die Trennung von Luft und Wasser kann ein nicht-schäumendes Wasser am Ausgang der Vorrichtung bereitgestellt werden, das zu keiner stockenden Wasserversorgung im anschließenden Wassernetz bzw. am Wasserhahn führt.

Um den Wirkungsgrad der Vorrichtung zur Energieerzeugung zu verbessern, ist das wenigstens eine Fluidstrombeschleunigungselement vorteilhafterweise derart ausgebildet, dass der Fluidstrom im Wesentlich senkrecht zu einer der wenigstens einen Turbinenschaufel angeordnet ist. Dadurch wirkt der Fluidstrom, insbesondere der Wasserstrahl vollständig als Hebelkraft auf die Turbinenschaufel und somit auf das Turbinenmittel, und kann fast vollständig seine dynamische Energie auf die Turbinenschaufel übertragen und das Rotationsmittel in Drehung versetzen.

Eine weitere Möglichkeit, den Wirkungsgrad der Vorrichtung zur Energieerzeugung zu verbessern ist, die wenigstens eine Turbinenschaufel zumindest teilweise beweglich und/oder verformbar und/oder klappbar auszubilden. Dadurch bietet die insbesondere seitlich ausgebildete Oberfläche des Turbinenmittels weniger Reibungsfläche und/oder eine bessere Stromlinienform.

Des Weiteren ist es vorteilhaft, dass die Vorrichtung zur Energieerzeugung ein eigenes Gehäuse aufweist und/oder in einem Rohrsystem, insbesondere in einem Rohr des Rohrsystems eingeführt, ausgebildet und/oder angeordnet ist. Weist die Vorrichtung kein Gehäuse auf, können die verschiedenen Mittel der Vorrichtung über eine Halteeinrichtung in entsprechender Position angeordnet werden, um deren Betriebsfunktion zu ermöglichen und aufrecht zu erhalten.

Weitere Einzelheiten und Vorteile der Erfindung sollen nun anhand eines nachstehend beschriebenen und in der Zeichnung dargestellten Ausführungsbeispiels näher erläutert werden.

Es zeigen:

Fig. 1: ein erfindungsgemäßes Ausführungsbeispiel der Vorrichtung zur Energieerzeugung im Querschnitt;

Fig. 2: das gemäß Figur 1 dargestellte Ausführungsbeispiel der Vorrichtung zur Energieerzeugung in der Draufsicht;

Fig. 3: das gemäß Figur 1 und 2 dargestellte Ausführungsbeispiel der Vorrichtung zur Energieerzeugung mit einer vorteilhaft angepassten Düse in der Draufsicht;

Fig. 4: eine Anordnung einer erfindungsgemäßen Vorrichtung zur Energieerzeugung innerhalb eines Strom- und Wassernetzwerkes; und

Fig. 5: eine Anordnung dreier erfindungsgemäßen Vorrichtungen zur Energieerzeugung in einem Hochhaus.

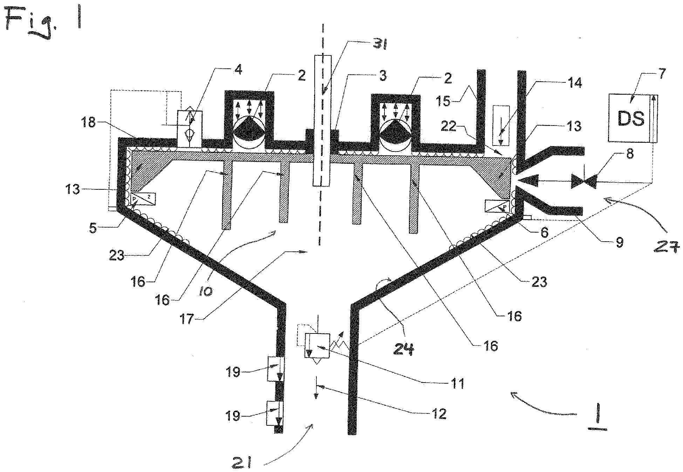

Figur 1 zeigt ein Ausführungsbeispiel einer Vorrichtung 1 zur Energieerzeugung, wobei die Vorrichtung mit wenigstens einem Fluidzuführmittel 27 und wenigstens einem Fluidabflussmittel 21, mit einer Turbine 10 mit wenigstens einer Turbinenschaufel 13, mit wenigstens einem Fluidstrombeschleunigungselement 9, mittels dessen ein Fluidstrom aus dem Fluidzuführmittel 27 auf die wenigstens eine Turbinenschaufel 13 zu deren Antrieb leitbar ist, mit wenigstens einem Gaszuführmittel 15, mittels dessen dem Druckkessel 17 des Turbinengehäuses 18 ein Gas, insbesondere Luft, zuführbar ist, und mit wenigstens einem Pulsationsmittel 2 versehen ist, mittels dessen das zugeführte Gas und das zugeführte Fluid in eine resonante Schwingung versetzbar ist. Die Vorrichtung weist ein Gaspolster auf, insbesondere ein Luftpolster, welches sich im Betrieb der Vorrichtung zwischen dem turbinenseitigen Ende des Druckkessels 17 und dem im Druckkessel 17 befindlichen Fluid bildet, wobei die Rotation der Turbinenschaufel 13 teilweise in jenem Luftpolster erfolgt. Bei Figur 1 kann man davon ausgehen, dass sich das Polster mindestens von der oberen Innengehäuseoberfläche bis unterhalb der Düse 9 erstreckt. Dadurch wird gewährleistet, dass der Wasserstrahl der Düse 9 nicht in das Wasser oder in das Wasser-Luft-Gemisch geleitet wird und einen Unterdruck im Luftpolster zum Öffnen eines Zuluft-Druckventils 14 des Gaszuführmittels 15 erzeugen kann.

In dem Ausführungsbeispiel sind das Fluidzuführmittel als Wasserzuflussleitung 27 und das Fluidabflussmittel als Wasserabflussleitung 21 ausgebildet, die an einen ein Gehäuse 18 aufweisenden Druckkessel 17 angeschlossen sind. Sowohl die Wasserzuflussleitung 27 als auch die Wasserabflussleitung 21 führen eine laminare Wasserströmung 12. Das Turbinenmittel ist als im Druckkessel 17 waagrecht gelagerte Turbine 10 mit zahlreichen, seitlich angeordneten und beweglich befestigten Turbinenschaufeln 13 ausgeführt und weist zwei unterhalb und koaxial zur Rotationsachse 31 der Turbine 10 befestigte Mischzylinder 16 auf, die zum Mischen des dem Druckkessel 17 zugeführten Gases mit dem den Druckkessel 17 durchströmenden Fluid dienen. Die Rotationsachse 31, insbesondere eine Welle, die entlang der Rotationsachse liegt, ist koaxial mit der Turbine 10 fest und mittels eines Achslagers 3, zum Beispiel in Form eines Kugellagers, rotierbar lagernd mit dem Gehäuse 18 verbunden. Des Weiteren ist die Rotationsachse 31 mit einem Generator zur Stromerzeugung wirkverbindbar. Das wenigstens eine Fluidstrombeschleunigungselement ist als ein röhrenförmiges Fluidstrombeschleunigungselement in Form einer Düse 9 ausgebildet, die gemäß Fig. 1 mittels zweier Drucksensoren 6 und 11 sowie zweier Pneumatiksensoren 19 über eine Düsensteuerung 7 steuerbar ist, welcher die Ausgangssignale eines im Druckkessel 17 im Bereich des Fluideintritts angeordneten Drucksensors 6 und/oder eines im Bereich des Fluidaustritts angeordneten Pneumatiksensors 19 und eines im Bereich des Fluidaustritts angeordneten Regelventils 11 zum Regeln des Fluiddrucks zugeführt werden. Der Drucksensor 6 ist an der Innenfläche des Turbinengehäuses 18 unterhalb der Düse 9 und den Turbinenschaufeln 13 angeordnet. Der Drucksensor 11 ist im Turbinenausgangsbereich angeordnet uns hat außerdem die Funktion als Regel- und Rücksperrventil. Die Pneumatiksensoren 19 sind am Rand, insbesondere in der Rohrwand der Wasserabflussleitung 21 ausgebildet. Der durch die Düse 9 erzeugte Fluidstrom 20, in diesem Beispiel als Wasserstrahl ausgebildet, bewirkt im Bereich der Düsenöffnung einen Unterdruck 22.

Des Weiteren ist in dem Ausführungsbeispiel das wenigstens eine Gaszuführmittel als eine Gaszuleitung ausgebildet, insbesondere als Luftzuleitung 15 in Form eines Ansaugstutzens mit wenigstens einem Zuluft-Druckventil 14, wobei der Ansaugstutzen zum Erzeugen eines Unterdruckbereichs 22 in unmittelbarer räumlicher Nähe zum Austritt des Fluidstroms aus dem Fluidstrombeschleunigungselement 9 in den Druckkessel 17 des Turbinengehäuses 18 mündet. Die Luftzuleitung 15 ist oberhalb der Turbinenschaufeln 13 und der Düse 9 angeordnet. Zwei Pulsationsmittel 2 sind oberhalb der Turbine 10 in zwei Ausbuchtungen innerhalb des Gehäuses 18 angeordnet. Jedes Pulsationsmittel weist eine - hier nicht dargestellte - Membran auf, die mit einem - hier ebenfalls nicht dargestellten - Piezoelement und/oder Elektromagneteinheit zusammenwirkt und mittels diesem/dieser gesteuert wird. Andere Formen wie z.B. hydraulische oder pneumatische Pulsationsmittel und eine andere Anzahl an Pulsationsmitteln 2 sind möglich. So können die Pulsationsmittel auch ringförmig ausgebildet sein.

Die Vorrichtung 1 zur Energieerzeugung ist in einer gehäuseartigen Hülle, in dem Ausführungsbeispiel in Form eines Gehäuses 18, angeordnet, die insbesondere im Rotationsbereich der Turbine 10 eine zumindest teilweise raue und/oder kantige Innenoberfläche 23 zum Erzeugen einer turbulenten Strömung des Fluids aufweist. Zusätzlich weist das Gehäuse 18 eine zumindest teilweise glatte, im Wesentlichen zum Fluidabflussmittel angrenzende Innenoberfläche 24 zum Erzeugen einer laminaren Strömung des Fluids auf. Die glatte Oberfläche ist stromabwärts und außerhalb des Rotationsbereichs der Turbine 10 ausgebildet. Das Gehäuse 18 ist abhängig von dem maximal möglichen Wasserdurchfluss derart dimensioniert, dass sich bei hoher Wasserentnahme durch das Fluidabflussmittel auf der Verbraucherseite das Luftpolster innerhalb des Gehäuses nicht zu weit ausdehnt, um das Entstehen von Instabilitäten oder Geräuschentwicklungen der Turbine 10 zu verhindern. Dabei fließt das Wasser schneller ab, je höher der Verbrauch ist, z.B. je mehr Wasserhähne auf der Verbraucherseite geöffnet sind.

Des Weiteren ist für das wenigstens eine Fluidabflussmittel ein mittels einer Düsensteuerung 7 steuerbares Regelventil 11 zum Regeln des Fluiddrucks vorgesehen. Das Regelventil 11 ist stromaufwärts von den Pneumatiksensoren 19 angeordnet und als Regelventil und/oder Rücksperrventil ausgebildet, das für den Fall eines höheren Drucks auf der Verbrauchseite als eines im Inneren der Vorrichtung 1 zur Energieerzeugung das rückschlagende Wasser am Zugang in die Vorrichtung 1 blockiert und somit das Luftpolster im oberen Turbinenbereich aufrechterhält. Auf der Oberseite des Gehäuses 18 weist die Vorrichtung 1 zur Energieerzeugung ein Abluftventil 4 zum Steuern des zugeführten Fluid- und/oder Gasvolumens auf. Das Abluftventil 4 ist am turbinenseitigen Ende des Druckkessels 17 angeordnet und mittels eines im Druckkessel 17 befindlichen Luftdrucksensors 5 steuerbar. Das Abluftventil ist derart ausgebildet, einen Überdruck des Luftpolsters zu reduzieren und Luft aus dem Druckkessel, insbesondere Luft des Luftpolsters, entweichen zu lassen. Der Luftdrucksensor 5 ist unterhalb der Turbinenschaufeln 13 am Gehäuseinnenrand angeordnet. Die Düse 9 ist derart ausgebildet und einstellbar, dass der Fluidstrom im Wesentlichen senkrecht zu einer der wenigstens einen Turbinenschaufel 13 angeordnet ist. Die wenigstens eine Turbinenschaufel 13 ist zumindest teilweise beweglich und/oder verformbar und/oder klappbar ausgebildet. Sobald sich die Turbinenschaufel 13 dem Fluidstrom 20 nähert, wird sie aufgeklappt und nimmt die dynamische Energie des Fluidstroms auf. Wenn sie den Wirkbereich des Fluidstroms verlässt, wird die Turbinenschaufel 13 eingeklappt. Das Einklappen kann unter anderem durch den Strömungswiderstand und/oder eine zwischen Turbinenrad und Turbinenschaufel angeordnete und wirkverbundene Feder erfolgen.

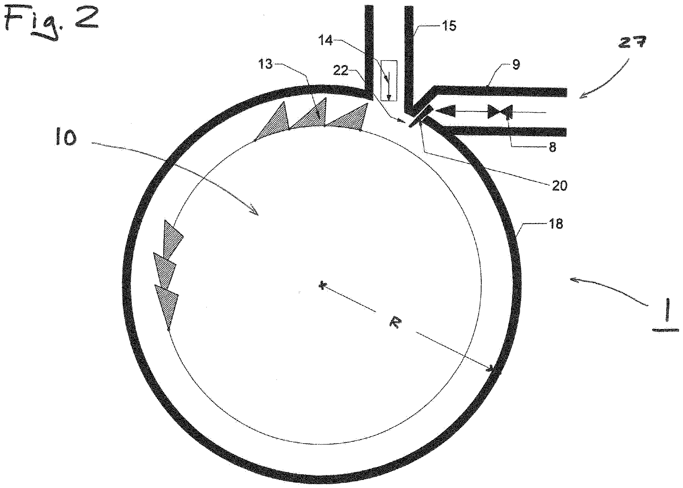

Figur 2 zeigt das zuvor in Figur 1 beschriebene Ausführungsbeispiel der Vorrichtung 1 zur Energieerzeugung in einer Draufsicht. Die zu Figur 1 unterschiedliche, seitliche Anordnung der Luftzuleitung 15 am Gehäuse 18 dient lediglich der Veranschaulichung der Vorrichtung 1 zur Energieerzeugung und ist für die Ausführbarkeit der Erfindung unerheblich. Die Luftzuleitung 15 ist, wie hier dargestellt, direkt neben der Wasserzuleitung 27 angeordnet, damit Luft aus der Luftzuleitung 15 durch den Unterdruck 22, der durch einen Fluidstrom 20, insbesondere einem Wasserstrahl erzeugt wird, ohne weitere Hilfsmittel angesaugt werden kann. Des Weiteren werden in der Draufsicht die Turbinenschaufeln 13 in einer aufgeklappten und in einer eingeklappten Stellung gezeigt. Die Turbinenschaufeln 13 sind senkrecht zur Rotationsachse 31 beweglich bzw. klappbar und vorzugsweise jeweils an einer am Rand der Turbine 10 und parallel zur Rotationsachse 31 angeordneten Achse schwenkbar befestigt.

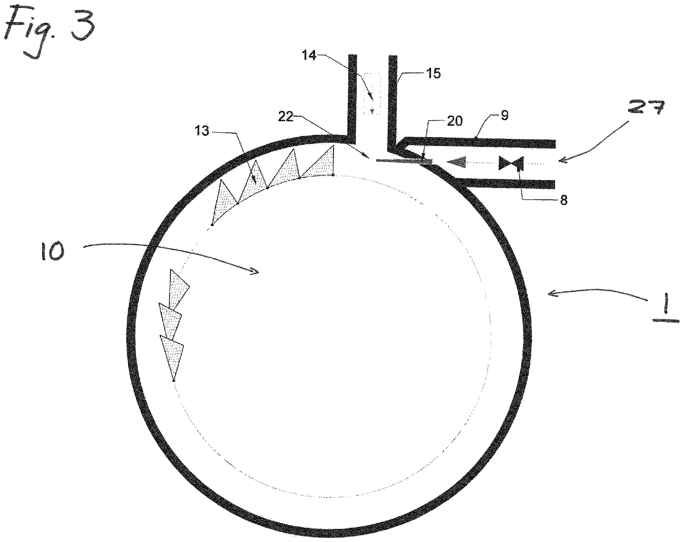

Figur 3 zeigt das zuvor in Figur 1 beschriebene Ausführungsbeispiel der Vorrichtung 1 zur Energieerzeugung in einer weiteren Draufsicht, wobei die Düse 9 in Figur 3 derart angepasst ist, dass der Fluidstrom 20 senkrecht auf eine der wenigstens einen Turbinenschaufel 13 trifft. Bis auf die angepasste Düse 9 und den senkrecht auftreffenden Fluidstrom 20 entspricht das Ausführungsbeispiel in Figur 3 dem in Figur 2. Die Turbinenschaufel 13 ist ausgeklappt, wobei eine Hauptfläche der Turbinenschaufel 13, auf die der Fluidstrom 20 trifft, radial zum Mittelpunkt der Turbine 10 angeordnet ist.

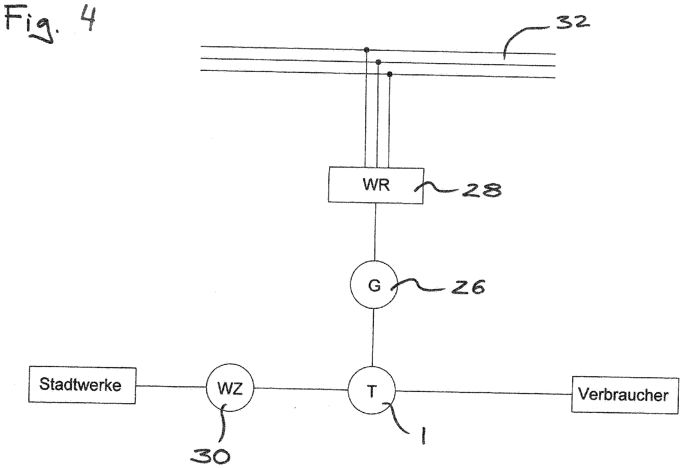

Figur 4 zeigt eine Anordnung einer erfindungsgemäßen Vorrichtung 1 zur Energieerzeugung zwischen einem Stromnetz 1 und einem Wassernetz, das die Stadtwerke und die Verbraucher verbindet und mit Wasser versorgt. Die dargestellten Stadtwerke in der Figur bilden eine Quelle des Wassers, wobei die zum Verbraucher transportiere Wassermenge mittels eines Wasserzählers 30 gemessen wird. Auf den Wasserzähler 30 folgend ist die erfindungsgemäße Vorrichtung 1 zur Energieerzeugung angeschlossen. Von der Vorrichtung 1 wird das Wasser weiter zum Verbraucher transportiert. Die durch die Vorrichtung 1 mittels des durchflossenen Wassers erzeugte Rotationsbewegung wird auf die - hier nicht dargestellten - Rotationsachse der Vorrichtung 1 übertragen, die mit einem Elektrogenerator 26 wirkverbunden ist. Der Elektrogenerator wandelt die Rotationsbewegung in Elektrizität um und leitet diese an einen Wechselrichter 28 weiter. Der Wechselrichter 28 erzeugt aus der Elektrizität einen dreiphasigen Wechselstrom, der in das Stromnetz 32 eingespeist werden kann bzw. wird.

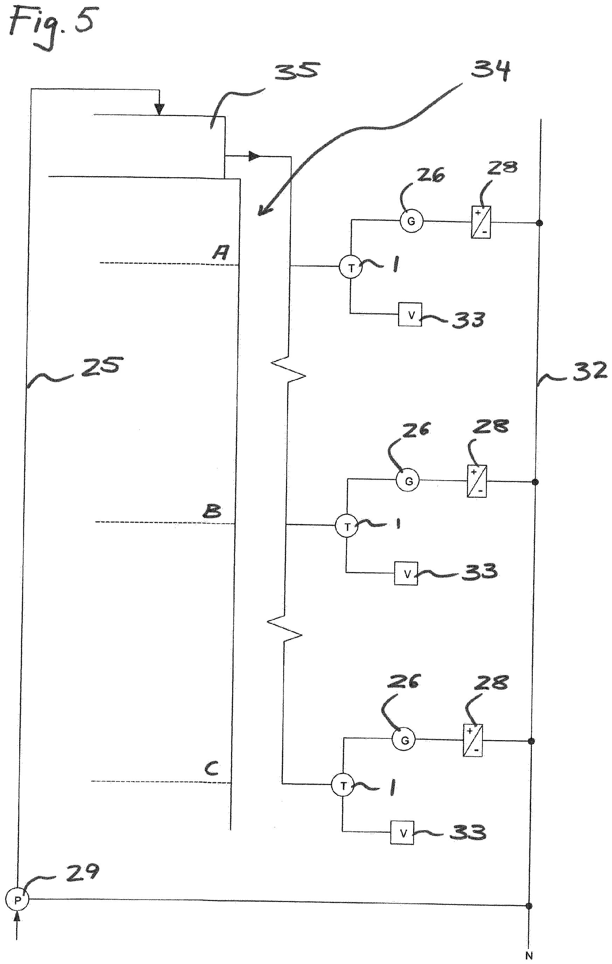

Figur 5 zeigt eine Anordnung dreier erfindungsgemäßer Vorrichtungen 1 zur Energieerzeugung in einem Hochhaus 34, auf dessen Dach ein Wasserspeicher 35 angeordnet ist. Wasser wird mittels einer Pumpe 29 über eine Wasserleitung 25 in den Wasserspeicher 35 hoch gepumpt und darin gespeichert, wobei ein Verbraucher 33 in einer Etage bei Bedarf über eine zwischen Wasserspeicher 35 und Verbraucher angeordnete Wasserhauptfallleitung auf das Wasser zugreifen kann. Auf Grund der potenzielle Energie des Wassers im Wasserspeicher ist vorzugsweise keine Pumpe für den Zugriff und die Versorgung notwendig. Unter diesen Voraussetzungen könnte praktisch auf jeder Etage und an jeder Wasserhauptfallleitung eine erfindungsgemäße Vorrichtung 1 zur Energieerzeugung eingebaut werden, wenn die zur Verfügung stehende Druckdifferenz mindestens 4 bar beträgt.

Das Hochhaus hat in diesem Beispiel eine Höhe von 300 m und weist die Etagen ‚A', 'B' und 'C' auf. Jeder der zuvor genannten drei Etagen weist jeweils eine Vorrichtung 1 zur Energieerzeugung einen mit der Vorrichtung 1 zusammenwirkenden Generator 26, einen über die Vorrichtung 1 mit Wasser versorgbaren Verbraucher 33 und einen mit dem Generator 26 elektrisch verbundenen Wechselrichter 28 auf. Der Wechselrichter 28 ist dazu ausgelegt, den durch den Generator 26 erzeugten elektrischen Strom an das Stromnetz 32 anzupassen und weiterzuleiten.

Im Folgenden werden Zahlenbeispiele für das Hochhaus genannt: Etage A entspricht einer 60. Etage des Hochhauses, die auf 240 m Höhe des Hochhauses liegt und einen Wasserdruck von 6 bar aufweist. Etage B entspricht einer 30. Etage, das auf 120 m Höhe des Hochhauses liegt und einen Wasserdruck von 18 bar aufweist. Etage C entspricht einem Erdgeschoss, die auf 1 m Höhe des Hochhauses liegt und einen Wasserdruck von 30 bar aufweist. Auf Grund des vergleichbar hohen Drucks ist die Energieerzeugung mittels der Vorrichtung 1 in Etage C am höchsten, während die Energieerzeugung in Etage A im Vergleich zu der Energieerzeugung in den Etagen B und C bzw. der darunterliegenden Etage am geringsten ist.

Im Folgenden wird die Turbinenleistung unter Zugrundelegung der Druckdifferenz und des Höhenunterschieds der Etagen des 300m hohen Hochhauses aus Figur 5 berechnet:

( angenommener Wasserverbrauch: 1 m$^3$ pro Stunde )

Beispiel: 60. Etage (Höhe ca. 240 m)

| Druck Turbineneingang: | 6 bar |
|---|---|
| Druck Turbinenausgang: | 2 bar |
| Nutzbare Druckdifferenz: | 4 bar |

$$E = 400.000 \text{ N/m}^2 * 1\text{m}^3 = 400.000 \text{ Nm}$$

$$P = 400.000 \text{ Ws} : 3600 \text{ s} = \text{ca. } \mathbf{111\ W} \text{ ( pro Stunde )}$$

Beispiel: 30. Etage (Höhe ca. 120 m)

| | |
|---|---|
| Druck Turbineneingang: | 18 bar |
| Druck Turbinenausgang: | 2 bar |
| Nutzbare Druckdifferenz: | 16 bar |

$$E = 1.600.000 \text{ N/m}^2 * 1\text{m}^3 = 1.600.000 \text{ Nm}$$

$$P = 1.600.000 \text{ Ws} : 3600 \text{ s} = \text{ca. } \mathbf{444 \ W} \quad (\text{pro Stunde})$$

Beispiel: Erdgeschoss (Höhe ca. 1 m)

| | |
|---|---|
| Druck Turbineneingang: | 30 bar |
| Druck Turbinenausgang: | 2 bar |
| Nutzbare Druckdifferenz: | 28 bar |

$$E = 2.800.000 \text{ N/m}^2 * 1\text{m}^3 = 2.800.000 \text{ Nm}$$

$$P = 2.800.000 \text{ Ws} : 3600 \text{ s} = \text{ca. } \mathbf{778 \ W} \quad (\text{pro Stunde})$$
$$= \text{ca. } 0{,}778 \text{ kW} \quad (\text{pro Stunde})$$

Neben dem Fall, dass eine Vorrichtungen 1 zur Energieerzeugung nur durch das Wasser vom Verbraucher 33 aus der gleichen Etage angetrieben werden kann, existiert die Möglichkeit, dass eine Vorrichtung 1 zur Energieerzeugung in der Wasserhauptfallleitung angeordnet ist und mittels des Wassers eines jeden Wasser verbrauchenden Verbrauchers 33, der auf mit der Vorrichtung 1 gleicher und/oder darunterliegender Höhe und/oder Etage angeordnet ist, angetrieben wird.

Nachfolgend werden ein Rechenbeispiel 1 gemäß dem Impulsgesetz und ein Rechenbeispiel 2 gemäß dem Bernoulli Gesetz für die erzeugte Leistung einer Vorrichtung 1 präsentiert.

• Systemdaten:

Eingangsdruck an der Turbine: $p1 = 6\text{bar} = 6 * 10^5 \text{ N/m}^2$
Ausgangsdruck an der Turbine: $p2 = 2\text{bar} = 2 * 10^5 \text{ N/m}^2$
Differenzdruck: $p3 = 4\text{bar} = 4 * 10^5 \text{ N/m}^2$
Wasserleitungsquerschnittsfläche $A_L = 22\text{cm}^2 = 0{,}0022\text{m}^2$
Wasservolumen in der Leitung $V_W = 60\text{m} * 0{,}0022\text{m}^2 = 0{,}132\text{m}^3$
Radius Turbine $R = 0{,}25\text{m}$; Durchmesser $D = 0{,}5\text{m}$
Wassermenge pro Stunde $Q = 0{,}72\text{m}^3$
Wassermenge pro Sekunde $Q = 0{,}0002\text{m}^3$
Durchmesser der Düse $D = 3{,}5 - 4 \text{ mm}$
Querschnittsfläche der Düse $A_D = 0{,}00001256\text{m}^2$

• Rechenbeispiel 1 - Berechnung nach dem Impulsgesetz:

Berechnung Strahlgeschwindigkeit $V_s$ (Wasserdruck in 40m Tiefe = 4bar)

$$v_s = \sqrt{2 \cdot g \cdot h} = \sqrt{2 \cdot 9{,}81 \cdot 40}\,\frac{m}{s} = \sqrt{785}\,\frac{m}{s} = 28\,\frac{m}{s}$$

Wegen der Reibung ist der Strahl etwa um 2 bis 4% langsamer: $v_s = 27\,\dfrac{m}{s}$

Berechnung Turbinendrehzahl $D_t$

$$D_t = \frac{v_s}{2 \cdot R} = \frac{27}{2 \cdot 0{,}25}\,\frac{rad}{\sec} = 54\,\frac{rad}{\sec}$$

Berechnung Turbinengeschwindigkeit $v_t$

$$v_t = R \cdot D_t = 0{,}25 \cdot 54\,\frac{m}{s} = 13{,}5\,\frac{m}{s}$$

Die optimale Geschwindigkeit ist etwas 2 bis 10% geringer: $v_t = 12{,}2\,\dfrac{m}{s}$

Leistung $P_w$ aus dem Wasserangebot

$$P_w = p \cdot g \cdot h \cdot A_L \cdot V_w = 1000 \cdot 9{,}81 \cdot 60 \cdot 0{,}0022 \cdot 0{,}132 = ca.\,170\,Watt$$

Leistung $P_t$ der Turbine

$$F\ Kraftsto\ss = p \cdot A_D \cdot \left(v_s^2 - v_s \cdot v_t\right) = 1000 \cdot 0{,}00001256 \cdot \left(27^2 - 27 \cdot 12{,}2\right) N = 5\ N$$

$$M\ Drehmoment = F \cdot R = 5 \cdot 0{,}25 = 1{,}25\ N$$

$$v_t = 12{,}2\,\frac{m}{s} = 732\,\frac{m}{\min};\quad 732\,\frac{m}{\min}\,/\left(2 \cdot \pi \cdot R\right) = 732\,\frac{m}{\min}\,/\,1{,}57m = 466\,\frac{U}{\min}$$

$$P_t = \left(M \cdot \frac{U}{\min}\right) / 9550 = \left(1{,}25 \cdot 466\right) / 9550 = 61\,Watt$$

• Rechenbeispiel 2 - Berechnung nach dem Bernoulli Gesetz:

$$\frac{1}{2} \cdot p \cdot v_1^2 - \frac{1}{2} \cdot p \cdot v_2^2 = p2 - p1$$

$$\frac{1}{2} \cdot 1000\,\frac{kg}{m^3} \cdot v_1^2 - \frac{1}{2} \cdot 1000\,\frac{kg}{m^3} \cdot v_2^2 = p2 - p1$$

$v_1 = 0$; wegen der Stauung vor der Düse ist die Wassergeschwindigkeit fast null

$$-\frac{1}{2} \cdot 1000 \frac{kg}{m^3} \cdot v_2^2 = 2 \cdot 10^5 \frac{N}{m^2} - 6 \cdot 10^5 \frac{N}{m^2} = -4 \cdot 10^5 \frac{N}{m^2}$$

$$v_2 = 28 \frac{m}{s}$$

Wegen der Reibung ist der Strahl etwas um 2 bis 4% langsamer: $v_2 = 27 \frac{m}{s}$

Berechnung Turbinengeschwindigkeit $v_t = R \cdot D_t = 0,25 \cdot 54 \frac{m}{s} = 13,5 \frac{m}{s}$

Die optimale Geschwindigkeit ist etwas 2 bis 10% geringer: $v_t = 12,2 \frac{m}{s}$

$$F = p \cdot A \cdot \left( v_2^2 - v_2 \cdot v_t \right) = 1000 \frac{kg}{m^3} \cdot 0,00001256 m^2 \cdot \left( 27^2 \frac{m}{s} - 27 \frac{m}{s} \cdot 12,2 \frac{m}{s} \right) = 5\ N$$

$$M\ Drehmoment = F \cdot R = 5 \cdot 0,25 = 1,25\ N$$

$$v_t = 12,2 \frac{m}{s} = 732 \frac{m}{\min}; \quad 732 \frac{m}{\min} / \left( 2 \cdot \pi \cdot R \right) = 732 \frac{m}{\min} / 1,57 m = 466 \frac{U}{\min}$$

Leistung $P_t$ der Turbine

$$P_t = \left( M \cdot \frac{U}{\min} \right) / 9550 = \left( 1,25 \cdot 466 \right) / 9550 = 61\ Watt$$

**Bezugszeichenliste**

1    Vorrichtung zur Energieerzeugung
2    Pulsationsmittel
3    Achslager
4    Abluftventil
5    Luftdrucksensor
6    Wasserdrucksensor
7    Düsensteuerung
8    Sperrventil der Düse
9    Fluidstrombeschleunigungselement (Düse)
10   Turbine
11   Regel- und Rücksperrventil des Fluidabflussmittels
12   Fluidabfluss in laminarer Strömung
13   Turbinenschaufel
14   Zuluft-Druckventil
15   Gaszuführmittel (Luftzuleitung)
16   Mischzylinder
17   Druckkessel
18   Turbinengehäuse
19   Pneumatiksensor

20    Fluidstrom (Wasserstrahl)
21    Fluidabflussmittel (Wasserabflussleitung)
22    Unterdruckbereich
23    rauhe Oberfläche
24    glatte Oberfläche
25    Wasserleitung (in einem Hochhaus)
26    Elektrogenerator
27    Fluidzuführmittel (Wasserzuleitung)
28    Wechselrichter
29    Pumpe
30    Wasserzähler
31    Rotationsachse
32    Stromnetz
33    Verbraucher
34    Hochhaus
35    Wasserspeicher

**Patentansprüche**

1.  Vorrichtung zur Energieerzeugung, mit wenigstens einem Fluidzuführmittel (27) und wenigstens einem Fluidabflussmittel (21), mit einer in einem Druckkessel (17) eines Turbinengehäuses (18) angeordneten Turbine (10) mit wenigstens einer Turbinenschaufel (13), mit wenigstens einem Fluidstrombeschleunigungselement (9), mittels dessen
    ein Fluidstrom aus dem Fluidzuführmittel (27) auf die wenigstens eine Turbinenschaufel (13) zu deren Antrieb leitbar
    ist, mit wenigstens einem Gaszuführmittel (15), mittels dessen dem Druckkessel (17) des Turbinengehäuses (18)
    ein Gas zuführbar ist, und mit wenigstens einem unabhängig von der Turbine (10) aktivierbaren Pulsationsmittel
    (2), mittels dessen das zugeführte Gas und das zugeführte Fluid in eine resonante Schwingung versetzbar sind.

2.  Vorrichtung zur Energieerzeugung gemäß Anspruch 1,
    **dadurch gekennzeichnet,**
    **dass** das Gaszuführmittel (15) als Ansaugstutzen ausgebildet ist, welcher im Bereich der Erzeugung eines Unterdruckbereichs (22) in unmittelbarer räumlicher Nähe zum Austritt des Fluidstroms aus dem Fluidstrombeschleunigungselement (9) in den Druckkessel (17) des Turbinengehäuses (18) mündet.

3.  Vorrichtung zur Energieerzeugung gemäß Anspruch 1 oder 2,
    **gekennzeichnet durch**
    ein Gaspolster welches sich zwischen dem turbinenseitigen Ende des Druckkessels (17) und dem im Druckkessel
    (17) befindlichen Fluid bildet, wobei die Rotation der Turbinenschaufel (13) teilweise in jenem Luftpolster erfolgt.

4.  Vorrichtung zur Energieerzeugung gemäß einem der Ansprüche 1 bis 3,
    **dadurch gekennzeichnet,**
    **dass** das Fluidbeschleunigungselement (9) eine Düse ist, die mittels einer Düsensteuerung (7) steuerbar ist, welcher
    die Ausgangssignale eines im Druckkessel (17) im Bereich des Fluideintritts angeordneten Drucksensors (6)
    und/oder eines im Bereich des Fluidaustritts angeordneten Pneumatiksensors (19) und eines im Bereich des Fluidaustritts angeordneten Regelventils (11) zum Regeln des Fluiddrucks zugeführt werden.

5.  Vorrichtung zur Energieerzeugung gemäß einem der Ansprüche 1 bis 4,
    **dadurch gekennzeichnet,**
    **dass** das Pulsationsmittel (2) als wesentlichen Bestandteil eine Membran enthält.

6.  Vorrichtung zur Energieerzeugung gemäß Anspruch 5,
    **dadurch gekennzeichnet,**
    **dass** das Pulsationsmittel (2) wenigstens ein mit der Membran zusammenwirkendes Piezoelement und/oder eine
    mit der Membran zusammenwirkende Elektromagneteinheit aufweist.

7.  Vorrichtung zur Energieerzeugung gemäß Anspruch 5,
    **dadurch gekennzeichnet,**
    **dass** das Pulsationsmittel (2) wenigstens ein mit der Membran zusammenwirkendes Hydraulikmittel und/oder Pneumatikmittel aufweist.

8. Vorrichtung zur Energieerzeugung gemäß einem der Ansprüche 1 bis 7, **dadurch gekennzeichnet, dass** in dem Gaszuführmittel (15) wenigstens ein Druckventil (14) angeordnet ist.

9. Vorrichtung zur Energieerzeugung gemäß einem der Ansprüche 1 bis 8,
**dadurch gekennzeichnet,**
**dass** das Turbinengehäuse (18) im Rotationsbereich der Turbine (10) eine raue und/oder kantige Innenoberfläche (23) zum Erzeugen einer turbulenten Strömung des Fluids aufweist.

10. Vorrichtung zur Energieerzeugung gemäß einem der Ansprüche 1 bis 9,
**dadurch gekennzeichnet,**
**dass** das Turbinengehäuse (18) stromabwärts und außerhalb des Rotationsbereichs der Turbine (10) eine glatte Innenoberfläche zum Erzeugen einer laminaren Strömung des Fluids aufweist.

11. Vorrichtung zur Energieerzeugung gemäß einer der Ansprüche 1 bis 10,
**dadurch gekennzeichnet,**
**dass** die Turbine (10) wenigstens einen Mischzylinder (16) zum Mischen des dem Druckkessel (17) zugeführten Gases mit dem den Druckkessel (17) durchströmenden Fluid aufweist.

12. Vorrichtung zur Energieerzeugung gemäß einer der Ansprüche 1 bis 11,
**gekennzeichnet durch**
ein Abluftventil (4), welches am turbinenseitigen Ende des Druckkessels (17) angeordnet und mittels eines im Druckkessel (17) angeordneten Luftdrucksensors (5) steuerbar ist.

**Claims**

1. A device for generating energy comprising at least one fluid supply means (27) and at least one fluid discharge means (21), a turbine (10) having at least one turbine blade (13) arranged in a pressure vessel (17) of a turbine housing (18), at least one fluid flow accelerator element (9), by means of which the propelling of a flow of fluid from the fluid supply means (27) to the at least one turbine blade (13) can be directed, at least one gas supply means (15), by means of which gas can be supplied to the pressure vessel (17) of the turbine housing (18), and at least one pulsation means (2) which can be activated independently of the turbine (10), by means of which the supplied gas and the supplied fluid can be set into a resonant oscillation.

2. The device for generating energy according to claim 1,
**characterized in that**
the gas supply means (15) is designed as an intake manifold which leads into the pressure vessel (17) of the turbine housing (18) in the generating area of a negative pressure area (22) in direct spatial proximity to the outlet of the fluid flow from the fluid flow accelerator element (9).

3. The device for generating energy according to claim 1 or 2,
**characterized by**
a gas cushion which forms between the turbine-side end of the pressure vessel (17) and the fluid located in the pressure vessel (17), wherein the rotation of the turbine blade (13) partly occurs in said air cushion.

4. The device for generating energy according to one of claims 1 to 3,
**characterized in that**
the fluid flow accelerator element (9) is a nozzle controllable by a nozzle control (7) fed the output signal of a pressure sensor (6) arranged in the area of the fluid inlet and/or a pneumatic sensor (19) arranged in the area of the fluid outlet in the pressure vessel (17) and a control valve (11) arranged in the area of the fluid outlet for regulating the fluid pressure.

5. The device for generating energy according to one of claims 1 to 4,
**characterized in that**
the pulsation means (2) comprises a membrane as an essential component.

6. The device for generating energy according to claim 5,
**characterized in that**
the pulsation means (2) comprises at least one piezo element acting in conjunction with the membrane and/or one electromagnet unit acting in conjunction with the membrane.

7. The device for generating energy according to claim 5,
**characterized in that**
the pulsation means (2) comprises at least one hydraulic means and/or pneumatic means acting in conjunction with the membrane.

8. The device for generating energy according to one of claims 1 to 7,
**characterized in that**
at least one pressure valve (14) is arranged in the gas supply means (15).

9. The device for generating energy according to one of claims 1 to 8,
**characterized in that**
the turbine housing (18) has a rough and/or angular inner surface (23) in the rotational area of the turbine (10) for producing a turbulent fluid flow.

10. The device for generating energy according to one of claims 1 to 9,
**characterized in that**
the turbine housing (18) has a smooth inner surface downstream and outside of the rotational area of the turbine (10) for producing a laminar fluid flow.

11. The device for generating energy according to one of claims 1 to 10,
**characterized in that**
the turbine (10) comprises at least one mixing cylinder (16) for mixing the gas fed to the pressure vessel (17) with the fluid flowing through the pressure vessel (17).

12. The device for generating energy according to one of claims 1 to 11,
**characterized by**
an exhaust air valve (4) which is arranged on the turbine-side end of the pressure vessel (17) and can be controlled by means of an air pressure sensor (5) arranged in the pressure vessel (17).

**Revendications**

1. Dispositif de production d'énergie, comprenant au moins un moyen d'amenée de fluide (27) et au moins un moyen d'évacuation de fluide (21), comprenant une turbine (10) agencée dans une enceinte sous pression (17) d'un carter de turbine (18) avec au moins une aube de turbine (13), comprenant au moins un élément d'accélération d'écoulement de fluide (9) au moyen duquel un écoulement de fluide provenant du moyen d'amenée de fluide (27) peut être amené à ladite au moins une aube de turbine (13) pour son entraînement, comprenant au moins un moyen d'amenée de gaz (15), au moyen duquel un gaz peut être amené à l'enceinte sous pression (17) du carter de turbine, et comprenant au moins un moyen de pulsation (2) susceptible d'être activé indépendamment de la turbine (10), et au moyen duquel le gaz amené et le fluide amené peuvent être mis dans une oscillation résonante.

2. Dispositif de production d'énergie selon la revendication 1,
**caractérisé en ce que** le moyen d'amenée de gaz (15) est réalisé sous forme de pipe d'aspiration, qui débouche dans la zone de la production d'une zone en dépression (22) à proximité immédiate dans l'espace de la sortie de l'écoulement de fluide hors de l'élément d'accélération d'écoulement de fluide (9) dans l'enceinte sous pression (17) du carter de turbine (18).

3. Dispositif de production d'énergie selon la revendication 1 ou 2,
**caractérisé par** un tampon de gaz qui se forme entre l'extrémité côté turbine de l'enceinte sous pression (17) et le fluide qui se trouve dans l'enceinte sous pression (17), et la rotation des aubes de turbine (13) a lieu partiellement dans ledit tampon d'air.

4. Dispositif de production d'énergie selon l'une des revendications 1 à 3,

**caractérisé en ce que** l'élément d'accélération de fluide (9) est une tuyère qui peut être commandée au moyen d'une commande de tuyère (7), à laquelle sont amenés les signaux de sortie d'un capteur de pression (6) agencé dans l'enceinte sous pression (17) dans la zone de l'entrée de fluide et/ou d'un capteur pneumatique (19) agencé dans la zone de la sortie du fluide et d'une vanne de régulation (11) agencée dans la zone de la sortie du fluide et destinée à réguler la pression du fluide.

5. Dispositif de production d'énergie selon l'une des revendications 1 à 4,
   **caractérisé en ce que** le moyen de pulsation (2) contient à titre de composant essentiel une membrane.

6. Dispositif de production d'énergie selon la revendication 5,
   **caractérisé en ce que** le moyen de pulsation (2) comprend un élément piézoélectrique qui coopère avec la membrane et/ou une unité à électroaimant qui coopère avec la membrane.

7. Dispositif de production d'énergie selon la revendication 5,
   **caractérisé en ce que** le moyen de pulsation (2) comprend au moins un moyen hydraulique et/ou un moyen pneumatique qui coopère avec la membrane.

8. Dispositif de production d'énergie selon l'une des revendications 1 à 7,
   **caractérisé en ce qu'**au moins une vanne de pression (14) est agencée dans le moyen d'amenée de gaz (15).

9. Dispositif de production d'énergie selon l'une des revendications 1 à 8,
   **caractérisé en ce que** le carter de turbine (18) présente, dans la zone de rotation de la turbine (10), une surface intérieure rugueuse (23) et/ou comportant des arêtes pour engendrer un écoulement turbulent du fluide.

10. Dispositif de production d'énergie selon l'une des revendications 1 à 9,
    **caractérisé en ce que** le carter de turbine (18) présente, en aval est à l'extérieur de la zone de rotation de la turbine (10), une surface intérieure lisse pour engendrer un écoulement laminaire du fluide.

11. Dispositif de production d'énergie selon l'une des revendications 1 à 10,
    **caractérisé en ce que** la turbine (10) comprend au moins un cylindre de mélange (16) pour mélanger le gaz amené à l'enceinte sous pression (17) avec le fluide qui s'écoule à travers l'enceinte sous pression (17).

12. Dispositif de production d'énergie selon l'une des revendications 1 à 11,
    **caractérisé par** une vanne d'échappement d'air (4), qui est agencée à l'extrémité côté turbine de l'enceinte sous pression (17) et qui peut être commandée au moyen d'un capteur de pression d'air (5) agencé dans l'enceinte sous pression (17).

EP 2 765 306 B1

Fig. 1

17

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5823740 A